# EUROPEAN PATENT APPLICATION

(11) **EP 4 322 645 A1**
(43) Date of publication of application: **14.02.2024**
(21) Application number: 21935972.6
(22) Date of filing: 06.04.2021
(51) Int. Cl.: H04W 72/02

(54) **TERMINAL**

(71) Applicant: NTT DOCOMO, INC., Tokyo 100-6150 (JP)
(72) Inventor: HARADA, Hiroki, Tokyo 100-6150 (JP); SHIBAIKE, Naoya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2021/014627
(87) International publication number: WO 2022/215167

(57) **Abstract**

A terminal receives a synchronization signal block and specific system information, and assumes, in at least a part of different frequency bands different from frequency bands including one or more frequency ranges, that at least one of candidate values of a subcarrier spacing for the specific system information associated with a first subcarrier spacing for the synchronization signal block and a number of the candidate values is different from at least one of candidate values and a number of the candidate values associated with a second subcarrier spacing for the synchronization signal block.

## Description

### [Technical Field]

The present disclosure relates to a terminal performing radio communication, in particular to a terminal corresponding to a wide subcarrier spacing such as 960 kHz.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release-15 and Release-16 of the 3GPP (NR) specify the operation of a plurality of frequency ranges, specifically, bands including FR1(410 MHz to 7.125 GHz) and FR2(24.25 GHz to 52.6 GHz).

In addition, in Release-17 of 3GPP, NRs that exceed 52.6 GHz and support up to 71 GHz are being considered (Non-Patent Literature 1). In addition, Beyond 5G, 5G Evolution or 6G (Release-18 and later) aim to support frequencies above 71 GHz.

In utilizing such high frequency bands, the application of synchronization signal blocks (SSB(SS (Synchronization Signal))/PBCH (Physical Broadcast CHannel) Block) and specific CORESET(control resource sets), specifically, wide SCS such as 480 kHz and 960 kHz as subcarrier spacing (SCS) for CORESET 0, is also being considered (Non-Patent Literature 2).

### [Citation List]

### [Non-Patent Literature]

[Non-Patent Literature 1]
   "New WID on Extending current NR operation to 71 GHz," RP-193229, 3GPP TSG RAN Meeting #86, 3GPP, December 2019
[Non-Patent Literature 2]
   "Revised WID: Extending current NR operation to 71 GHz," RP-202925, 3GPP TSG RAN Meeting #90-e, 3GPP, December 2020

### [Summary of Invention]

When a large number of SCSs are used in the high frequency band as described above, it is difficult for the terminal (User Equipment, UE) to quickly assume an SCS for specific system information such as Remaining Minimum System Information (RMSI) from the SCS for the SSB. It is also difficult for the terminal to quickly assume an opportunity (For example, whether initial access only) when a large number of SCSs are used as described above.

Therefore, the following disclosure is made in view of such a situation, and is intended to provide a terminal capable of quickly assuming an appropriate subcarrier spacing for specific system information even when a large number of subcarrier spacings such as 960 kHz are supported in different frequency bands such as 52.6~71 GHz that are different from FR1 and FR2.

An aspect of the present disclosure is a terminal (UE200) including a reception unit (radio signal transmission and reception unit 210) that receives a synchronization signal block and specific system information, and a control unit (control unit 270), in at least a part of different frequency bands different from frequency bands including one or more frequency ranges, which assumes that at least one of candidate values of a subcarrier spacing for the specific system information associated with a first subcarrier spacing for the synchronization signal block and a number of the candidate values is different from at least one of candidate values and a number of the candidate values associated with a second subcarrier spacing for the synchronization signal block.

An aspect of the present disclosure is a terminal (UE200) including a reception unit (radio signal transmission and reception unit 210) that receives a synchronization signal block and specific system information, and a control unit (control unit 270), in at least a part of different frequency bands different from frequency bands including one or more frequency ranges, which assumes only a specific subcarrier spacing commonly for the synchronization signal block and the specific system information during initial access and assumes multiple subcarrier spacings including the specific subcarrier spacing commonly for the synchronization signal block and the specific system information other than during initial access.

An aspect of the present disclosure is a terminal (UE200) including a reception unit (radio signal transmission and reception unit 210) that receives a synchronization signal block, and a control unit (control unit 270), in at least a part of different frequency bands different from frequency bands including one or more frequency ranges, which assumes that a specific quasi-colocation value is applied to the synchronization signal block.

An aspect of the present disclosure is a terminal (UE200) including a reception unit (radio signal transmission and reception unit 210) that receives a synchronization signal block, and a control unit (control unit 270), in at least a part of different frequency bands different from frequency bands including one or more frequency ranges, which assumes quasi-colocation of the synchronization signal block to the synchronization signal block based on a method for notifying quasi-colocation in shared spectrum channel access.

An aspect of the present disclosure is a terminal (UE200) including a reception unit (radio signal transmission and reception unit 210) that receives a synchronization signal block, and a control unit (control unit 270), in at least a part of different frequency bands different from frequency bands including one or more frequency ranges, which assumes quasi-colocation of the synchronization signal block to the synchronization signal block based on a notification method different from a notification method of quasi-colocation in shared spectrum channel access.

### [Brief Description of Drawings]

[Fig. 1]

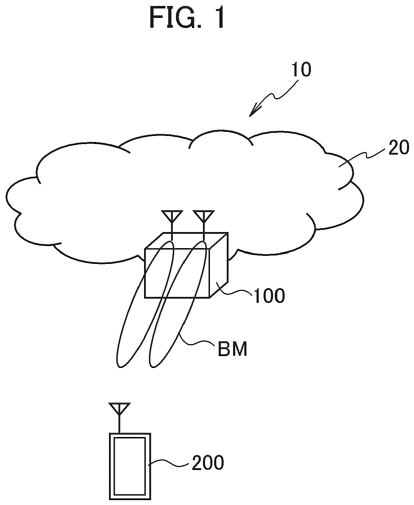

   Fig. 1 is an overall schematic diagram of a radio communication system 10.
[Fig. 2]

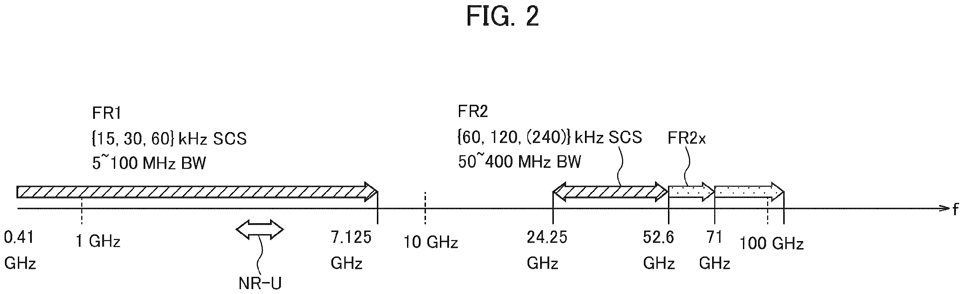

   Fig. 2 is a diagram showing the frequency range used in the radio communication system 10.
[Fig. 3]

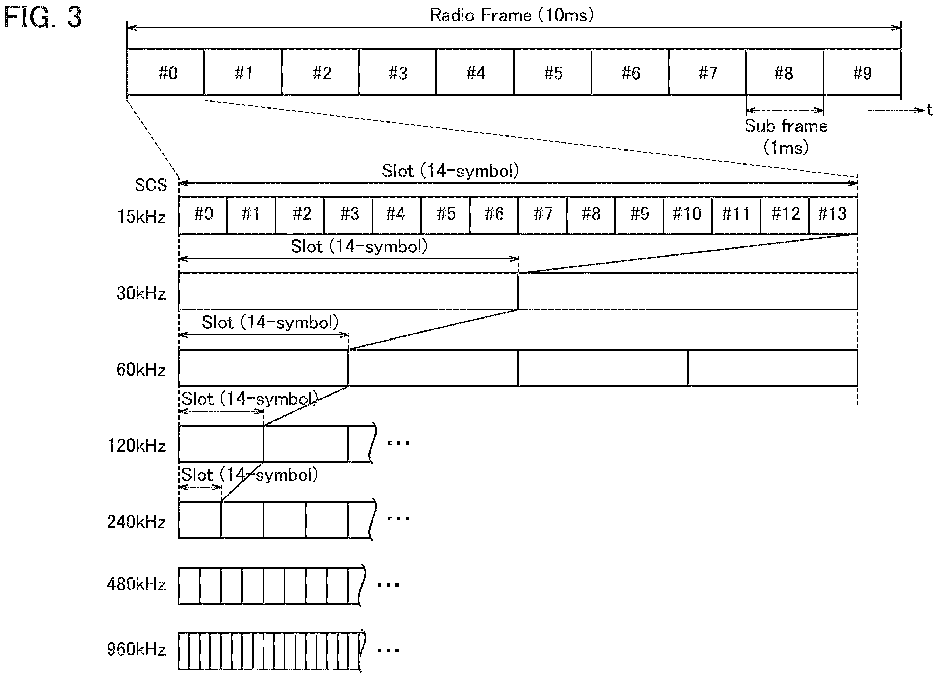

   Fig. 3 shows a configuration example of a radio frame, sub-frame and slot used in the radio communication system 10.
[Fig. 4]

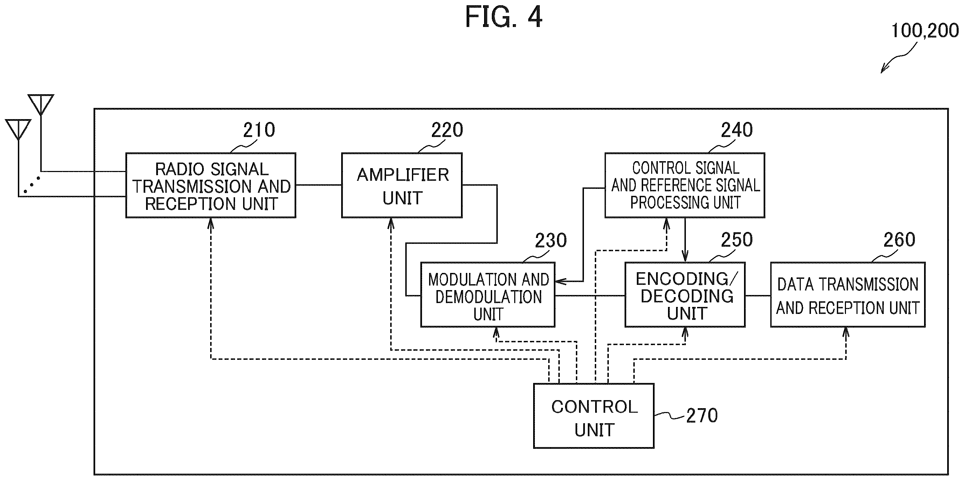

   Fig. 4 is a functional block diagram of the gNB100 and the UE200.
[Fig. 5]

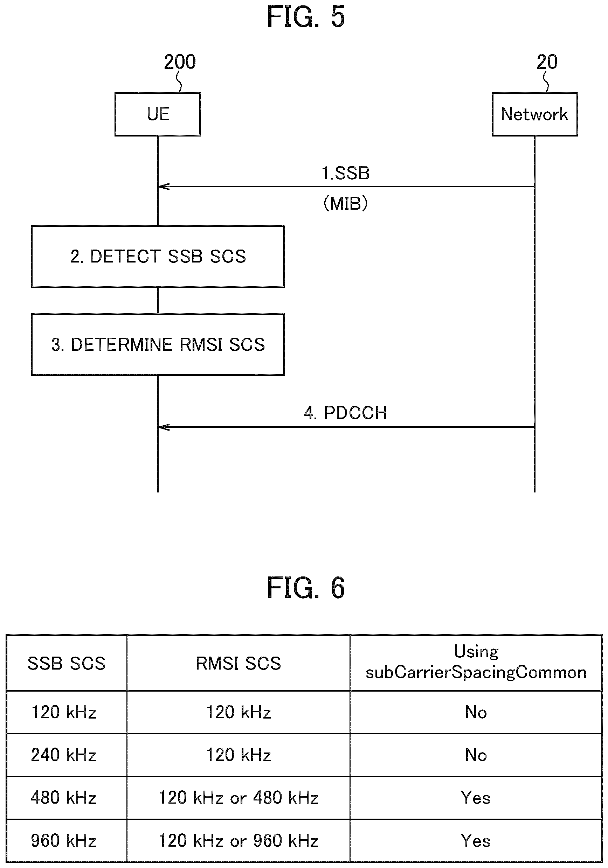

   Fig. 5 is a diagram showing a schematic communication sequence concerning the configuration of the SCS for SSB and the SCS for RMSI(SIB1) .
[Fig. 6]
   Fig. 6 is a diagram showing an example of connection between the SSB SCS and the RMSI SCS according to the operation example 1-1.
[Fig. 7]

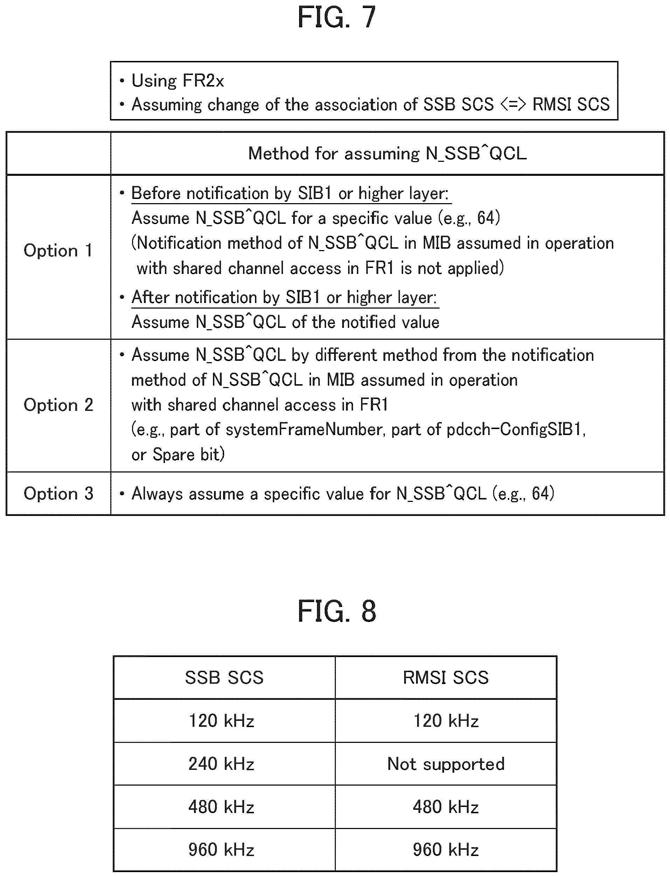

   Fig. 7 is a diagram showing an example of the assumed method in the N_SSB^QCL according to the operation example 1-2.
[Fig. 8]
   Fig. 8 is a diagram showing an example of connection between the SSB SCS and the RMSI SCS according to the operation example 2-1.
[Fig. 9]

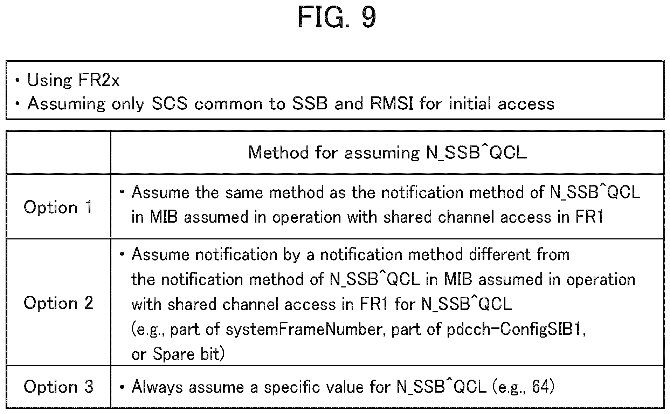

   Fig. 9 is a diagram showing an example of the assumed method in the N_SSB^QCL according to the operation example 2-2.
[Fig. 10]

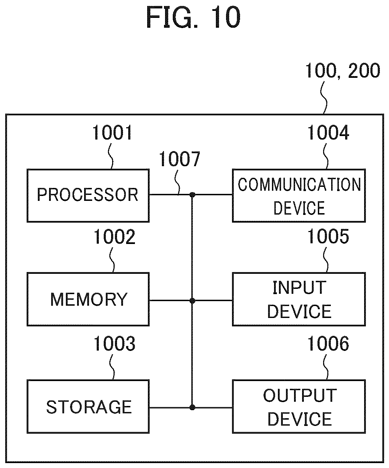

   Fig. 10 is a diagram showing an example of a hardware configuration of the gNB100 and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

Fig. 1 is an overall schematic configuration diagram of a radio communication system 10 according to the present embodiment. radio communication system 10 is a radio communication system according to 5G New Radio(NR) and includes the Next Generation-Radio Access Network 20 (hereinafter referred to as the NG-RAN20 and the terminal 200 (UE200, User Equipment, UE). The radio communication system 10 may be a radio communication system according to a system called Beyond 5G, 5G Evolution or 6G.

The NG-RAN20 includes a radio base station 100 (gNB100). The specific configuration of radio communication system 10 including the number of gNBs and UEs is not limited to the example shown in Fig. 1.

The NG-RAN20 actually includes a plurality of NG-RAN Nodes, specifically gNBs (or ng-eNBs), connected to a core network (5GC, not shown) according to 5G. Note that the NG-RAN20 and 5 GCs may be simply described as "networks ".

The gNB100 is a radio base station in accordance with 5G and performs radio communication in accordance with the UE200 and 5G. The gNB100 and the UE200 can support Massive MIMO(Multiple-Input Multiple-Output), which generates a more directional antenna beam (Beam BM) by controlling radio signals transmitted from multiple antenna elements; Carrier Aggregation (CA), which uses multiple component carriers (CCs) bundled together; and Dual Connectivity (DC), which simultaneously communicates between the UE and each of two NG-RAN Nodes.

The gNB100 can transmit multiple beams BM with different transmission directions (May be referred to simply as direction or radial direction or coverage, etc.) in space and time division. The gNB100 may transmit multiple beams BM simultaneously.

The radio communication system 10 may also support a plurality of frequency ranges (FRs). Fig. 2 shows the frequency ranges used in radio communication system 10.

▪ FR1:410 MHz~7.125 GHz
▪ FR2:24.25 GHz~52.6 GHz

FR1 uses sub-carrier spacing (SCS) of 15, 30 or 60 kHz and may use a bandwidth (BW) of 5~100 MHz. FR2 is higher frequency than FR1 and may use SCS of 60 or 120 kHz (may include 240 kHz) and may use a bandwidth (BW) of 50~400 MHz.

SCS may be interpreted as numerology. Numerology is defined in 3GPP TS38.300 and corresponds to one subcarrier spacing in the frequency domain.

In addition, radio communication system 10 corresponds to a higher frequency band than the FR2 frequency band. Specifically, radio communication system 10 corresponds to a frequency band exceeding 52.6 GHz and up to 71 GHz. Such a high frequency band may be referred to as "FR 2 x" for convenience. The high frequency band may also be referred to as a different frequency band than a frequency band including one or more frequency ranges (FRs), which may include a frequency band greater than 71 GHz and/or a frequency band between FR1 and FR2.

When using a high frequency band such as FR2x, cyclic prefix-orthogonal frequency division multiplexing (CP-OFDM)/discrete Fourier transform-spread (DFT-S-OFDM) with greater sub-carrier spacing (SCS) may be applied.

In addition, in a high frequency band such as FR2x, an increase in phase noise between carriers is a problem, as described above. Therefore, application of a larger (wider) SCS or single carrier waveform may be required.

The larger the SCS, the shorter the symbol/CP (cyclic prefix) period and the slot period (if the 14 symbol/slot configuration is maintained). Fig. 3 shows an example configuration of a radio frame, sub-frame and slot used in radio communication system 10. Table 1 shows the relationship between the SCS and the symbol period.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Period (Unit: µs) | 66.6 | 33.3 | 16.65 | 8.325 | 4.1625 | 2.08125 | 1.040625 |

As shown in Table 1, if the 14 symbols/slot configuration is maintained, the larger (wider) the SCS, the shorter the symbol period (and slot period).

Note that the time direction (t) shown in Fig. 3 may be referred to as a time region, a time domain, a symbol period, or a symbol time. The frequency direction may be referred to as a frequency region, a frequency domain, a resource block, a resource block group, a subcarrier, a BWP(Bandwidth part), a subchannel, a common frequency resource, or the like.

The number of symbols constituting 1 slot may not necessarily be 14 symbols (For example, 28, 56 symbols). The number of slots per subframe may vary depending on the SCS.

In radio communication system 10, an SSB(SS/PBCH Block) composed of a synchronization signal (SS) and a physical broadcast channel (PBCH) may be used.

The SSB is transmitted from the network periodically mainly for the UE200 to perform cell ID and reception timing detection at the start of communication. In NR, the SSB is also used to measure the reception quality of each cell. The transmission period (periodicity) of the SSB may be defined as 5, 10, 20, 40, 80, 160 milliseconds, etc. The UE200 of the initial access may be assumed to have a transmission period of 20 milliseconds.

The network (NG-RAN20) can notify the UE200 of the index display (ssb-PositionsInBurst) of the SSB actually transmitted by system information (SIB1) or radio resource control layer (RRC) signaling.

The SS is composed of a primary synchronization signal (PSS) and a secondary synchronization signal (SSS).

The PSS is the first known signal that the UE200 attempts to detect in the cell search procedure. The SSS is the known signal that is transmitted to detect the physical cell ID in the cell search procedure.

The PBCH contains information necessary for the UE200 to establish frame synchronization with the NR cell formed by the gNB100 after detecting the SS/PBCH Block, such as the SFN (System Frame Number), and an index for identifying the symbol positions of multiple SS/PBCH Blocks in a half frame (5 ms).

The PBCH may also contain system parameters necessary for receiving system information (May include SIB, Master Information Block (MIB)). The SSB may also include a reference signal for broadcast channel demodulation (DMRS for PBCH). DMRS for PBCH is a known signal transmitted to measure the radio channel state for PBCH demodulation.

The downlink (DL) radio resources used to transmit PDCCH(Physical Downlink Control Channel) can be specified by a control resource set (control resource sets, CORESET). In other words, CORESET can be interpreted as a set of physical resources (Specifically, a specific area on the DL resource grid) and parameters used to transmit PDCCH (which may include Downlink Control Information (DCI)).

The UE200 can assume the specific area to which CORESET is assigned based on the timing and period indicated by the Common Search Space (CSS).

CORESET may also include the following parameters:
▪ Resource element (RE): The smallest unit of a resource grid composed of one subcarrier in the frequency domain and one OFDM symbol in the time domain.
▪ Resource element group (REG): Composed of one resource block (12 resource elements in the frequency domain) and one OFDM symbol in the time domain.
▪ REG bundle: Composed of multiple REGs. The bundle size can be specified by the parameter 'L', which can be determined by the Radio Resource Control Layer (RRC) parameter (reg-bundle-size).
▪ Control Channel Element (CCE): Consists of multiple REGs. The number of REG bundles included in the CCE may be variable.
▪ Aggregation Level (AL) indicates the number of CCEs assigned to the PDCCH. 3GPP Releases-15 and 16 specify 1, 2, 4, 8, and 16, whereas the radio communication system 10 may use higher values.

When UE200 determines, based on the received Master Information Block (MIB), that a CORESET exists for a Type0-PDCCH CSS, it determines several contiguous resource blocks (RBs) and symbols for the CORESET (May be called CORESET 0 or Remaining Minimum System Information (RMSI) CORESET). Based on the determined RBs and symbols, UE200 sets monitoring opportunities (MOs) for PDCCH, specifically Type 0 PDCCH for System Information Block (SIB) decoding.

CORESET 0 is a special CORESET that is different from regular CORESET. Such a particular CORESET may be interpreted as a CORESET that sends a PDCCH for SIB1 scheduling. CORESET 0 cannot be specified by RRC because it is used before RRC signaling is sent.

RMSI may be interpreted to mean System Information Block 1(SIB1). RMSI may consist of system information that a device (UE200) must know before accessing the system. SIB1 may be broadcast periodically throughout the cell at all times. SIB1 may provide the information required by UE200 to perform the first random access (RA).

SIB1 is provided by a regular scheduled Physical Downlink Shared Channel (PDSCH) transmission with a period of 160 milliseconds. The PBCH/MIB may provide information about the numerology used for SIB1 transmission and the search space and corresponding CORESET used for scheduling SIB1. Within the CORESET, the UE200 may monitor the scheduling of SIB1 as indicated by a special System Information RNTI(SI-RNTI).

### (2)Function block configuration of radio communication system

Next, the function block configuration of radio communication system 10 will be described. Specifically, the function block configuration of the gNB100 and the UE200 will be described.

Fig. 4 is a function block configuration diagram of the gNB100 and the UE200. The UE200 will be described below.

As shown in Fig. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with the NR. The radio signal transmission and reception unit 210 corresponds to a Massive MIMO, a CA using a plurality of CCs bundled together, and a DC that simultaneously communicates between a UE and each of two NG-RAN Nodes.

In this embodiment, the radio signal transmission and reception unit 210 can receive a synchronous signal block (SSB) and/or system information.

Specifically, the radio signal transmission and reception unit 210 receives the SSB transmitted from the gNB100 using the beam BM (see Fig. 1). The beam BM may be a directional beam or a nondirectional beam.

The maximum number of beams used for SSB transmission is, for example, 64 (for 3GPP Release-15 (FR2)), but the maximum number of beams may be extended to cover a certain geographical area with a narrow beam. In this case, the number of SSBs may be 64 or more, and the value of the index for identifying SSBs (SSB index) after #64 may be used.

The system information may include a MIB and a plurality of SIBs, including RMSI(SIB1). In particular, in this embodiment, RMSI(SIB1) may be referred to as specific system information.

In this embodiment, the radio signal transmission and reception unit 210 may comprise a reception unit that receives synchronization signal blocks and/or specific system information.

The amplifier unit 220 may comprise a PA (Power Amplifier)/LNA (Low Noise Amplifier) or the like. The amplifier unit 220 amplifies the signal output from the modulation and demodulation unit 230 to a predetermined power level. The amplifier unit 220 amplifies the RF signal output from the radio signal transmission and reception unit 210.

The modulation and demodulation unit 230 performs data modulation/demodulation, transmission power setting, resource block allocation, etc., for each predetermined communication destination (gNB100, etc.). In the modulation and demodulation unit 230, Cyclic Prefix-Orthogonal Frequency Division Multiplexing(CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example, a radio resource control layer (RRC) control signal. The control signal and reference signal processing unit 240 also transmits various control signals to the gNB100 via a predetermined control channel.

The control signal and reference signal processing unit 240 executes processing using a reference signal (RS) such as a demodulation reference signal (DMRS) and a phase tracking reference signal (PTRS).

The DMRS is a reference signal (pilot signal) known between a base station and a terminal for each terminal to estimate a fading channel used for data demodulation. The PTRS is a reference signal for each terminal to estimate phase noise, which is a problem in a high frequency band.

In addition to the DMRS and the PTRS, the reference signal may include a Channel State Information-Reference Signal(CSI-RS), a Sounding Reference Signal (SRS), and a Positioning Reference Signal (PRS) for position information.

The channel may include a control channel and a data channel. The control channel may include PDCCH, PUCCH(Physical Uplink Control Channel), RACH (Random Access Channel, DCI with Random Access Radio Network Temporary Identifier(RA-RNTI)), and Physical Broadcast Channel (PBCH).

The data channel may also include PDSCH, and PUSCH(Physical Uplink Shared Channel). Data may mean data transmitted over a data channel. Data may mean user data, and control may mean various control signals transmitted over a control channel.

PUCCH may be interpreted as a UL physical channel used to transmit Uplink Control Information (UCI). UCI may be transmitted by either PUCCH or PUSCH depending on the circumstances. Note that DCI may always be transmitted by PDCCH and may not be transmitted via PDSCH.

The UCI may include at least one of hybrid automatic repeat request (HARQ) ACK/NACK, scheduling request (SR) from the UE200, and channel state information (CSI).

Also, the timing of PUCCH transmission and radio resources may be controlled by the DCI as well as the data channel.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. The encoding/decoding unit 250 decodes the data output from the modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). The data transmission and reception unit 260 also performs data error correction and retransmission control based on the hybrid automatic repeat request (ARQ).

The control unit 270 controls each functional block constituting the UE200. In particular, in this embodiment, the control unit 270 performs control on the configuration of the subcarrier spacing (SCS) for the synchronization signal block (SSB) and the SCS for system information.

Specifically, the control unit 270 can perform control on the configuration of the SCS in different frequency bands different from the frequency bands including FR1 and FR2, for example, FR2x (see Fig. 2). More specifically, the control unit 270 may assume the following regarding the configuration of the SCS in at least part of FR2x (As described above, higher frequency bands may also be included, hereinafter the same).

▪ Assume that at least one of the candidate values and the number of candidate values of the SCS for RMSI (specific system information) associated with the specific SCS for SSB (referred to as the first subcarrier spacing, e.g., 120 kHz) is different from at least one of the candidate values and the number of candidate values of the SCS for RMSI (specific system information) associated with the other SCS for SSB (referred to as the second subcarrier spacing, e.g., 240 kHz).

That is, at least one of the candidate values and the number of candidate values of the SCS for RMSI associated with the SCS may be different between the specific SCS for SSB and the other SCS for SSB.

Candidate values for SCS may be any of the SCS values shown in Table 1, but may be substantially limited to 120 kHz or greater, given the use of a high frequency band such as FR2x. The number of candidate values may be one or more.

The SCS for SSB may mean the SCS applied to transmit SSB; similarly, the SCS for RMSI may mean the SCS applied to transmit RMSI. RMSI may mean SIB1, as described above, but here RMSI may be interpreted as CORESET 0(RMSI CORESET). In addition, the term "associated" of the RMSI SCSs associated with the SSB SCSs may mean that the RMSI SCSs can be assumed once the SSB SCSs are determined, and may be replaced with the terms correspond to, related to, and the like.

A plurality of RMSI SCSs may be associated with the SSB SCSs. In this case, an RRC information element, e.g., subCarrierSpacingCommon, may be used to inform the plurality of RMSI SCSs. This information element (subCarrierSpacingCommon) may be included in the MIB.

The control unit 270 may also assume, at least in part of the FR2x, that the SCS configuration is as follows:
▪ In the initial access, only a specific SCS (For example, 120 kHz) is commonly assumed for the SSB and RMSI.
▪ In addition to the initial access, multiple SCSs including a specific SCS are commonly assumed for the SSB and RMSI.

The initial access may mean a series of operations performed between the UE200 and the gNB100, etc., in order for the UE200 to acquire uplink (UL) synchronization and obtain an ID designated for radio access communication.

More generally, the initial access may be referred to as a RACH process. Alternatively, initial access may mean downlink (DL) synchronization and RACH.

Common to SSB and RMSI may mean that the same SCS applies to SSB and RMSI. SCS not supported by RMSI may also be excluded.

When any of the above assumptions regarding SCS for RMSI is applied, the SCS assumed at initial access may be limited to a specific SCS (For example, 120 kHz). In cases other than initial access, it may be assumed that any one of the SCS defined above as SCS for SSB and/or SCS other than specific SCS is set from gNB100.

It may also be assumed that control unit 270 applies a specific Quasi-Colocation (QCL) value to SSB in at least part of FR2x.

Specifically, the control unit 270 may always assume a specific value (For example, 64) for the QCL parameter (N_SSB^QCL) for the SSB in the frequency band (band).

Note that the QCL assumes that the two antenna ports are located at the same pseudo location when, for example, the characteristics of the channel on which symbols on one antenna port are carried can be inferred from the channel on which symbols on the other antenna port are carried.

When the SSBs are different, specifically, the SSBs with different SSB indices (which may be interpreted as the beam BM used for SSB transmission) may be interpreted as having different QCL assumptions.

In other words, it can be interpreted that the SSBs with the same SSB index are assumed to have a QCL, and the other SSBs (i.e., different SSB indices) should not assume a QCL. The QCL may be called quasi-collocation. The QCL/TCI (Transmission Configuration Indication) state/beam may be interchanged.

The control unit 270 may also assume a specific value (For example, 64) for the N_SSB^QCL until notified by system information (SIB1) or a higher layer parameter (For example, parameters such as ssb-PositionQCL) of the RRC.

Alternatively, the control unit 270 may assume a QCL for the SSB, at least in part of the FR2x, based on how the QCL is notified for the SSB by shared channel access. Shared channel access may be interpreted as shared channel access in FR1, and may be interpreted as a type of licensed-assisted access (LAA) that extends the available frequency band using the spectrum of an unlicensed frequency band. Such shared channel access may be referred to as New Radio-Unlicensed(NR-U).

Specifically, the control unit 270 may assume a QCL for the SSB based on the combination of the subCarrierSpacingCommon and the LSB of the ssb-SubcarrierOffset.

Alternatively, the control unit 270 may assume a QCL for the SSB based on a different notification method for the SSB than the QCL notification method for shared channel access for at least a portion of the FR2x.

For example, the control unit 270 may assume a QCL for the SSB based on information communicated using at least one of a portion of the system frame number, an upper parameter for the configuration of the PDCCH (pdcch-ConfigSIB1), and a spare bit.

The pdcch-ConfigSIB1 is included in the MIB and is used to determine the CORESET, common search space, and required PDCCH parameters.

### (3)Operation of radio communication system

Next, the operation of radio communication system 10 will be described. Specifically, an operation example concerning the configuration of the SCS for the SSB and the SCS for the RMSI(SIB1) will be described.

### (3.1) Assumption

3GPP Release-15 specifies 120 kHz and 240 kHz as candidates for SSB SCS in the case of FR2, and both possibilities may be assumed at the initial access.

On the other hand, 60 kHz and 120 kHz are specified as candidates for RMSI SCSs, and {120, 60}, {120, 120}, {240, 60}, and {240, 120} may all be supported as a combination of SSB and RMSI SCSs.

For RMSI SCSs, 60 kHz or 120 kHz is specified by 1 bit of subCarrierSpacingCommon included in the MIB. In addition, the candidate value of the subcarrier offset between SSB RB and Common PRB(Physical Resource Block) is 0-11, which is notified using 4 bits of ssb-SubcarrierOffset in the MIB.

In NR-U(shared channel access) of 3GPP Release-16, the candidate SSB SCS is 15 kHz or 30 kHz, and 30 kHz may be assumed at the initial access.

As the candidate RMSI SCS, 15 kHz and 30 kHz are specified, and only {15, 15} and {30, 30} are supported as the combination of SSB and RMSI SCS.

In this case, one bit of subCarrierSpacingCommon, together with the LSB(least significant bit) of ssb-SubcarrierOffset, is used for N_SSB^QCL notification (that is, a different use than that specified for Rel-15/licensed carriers). In addition, the candidate value of the subcarrier offset between SSB RB and Common PRB is 0~22 (only even), and 4 bits of ssb-SubcarrierOffset in the MIB are used for notification.

### (3.2) Operation Outline

Fig. 5 shows a schematic communication sequence regarding the configuration of the SCS for SSB and the SCS for RMSI(SIB1). Note that the following operation may be applied when a high-frequency band such as FR2x (higher frequency band may be used) is used.

As shown in Fig. 5, the network (NG-RAN20) transmits the SSB toward UE200 (step 1). The SSB (PBCH) may include a MIB.

The UE200 can detect the SCS(SSB SCS) applied to the SSB based on the received SSB (step 2).

The UE200 can determine the SCS(RMSI SCS) applied to the RMSI based on the detected SSB SCS (step 3).

Specifically, the UE200 may determine the value of the RMSI SCS associated with the value of the SSB SCS based on the value of the SSB SCS.

The UE200 may set the CORESET based on the determined RMSI SCS and receive (detect) the PDCCH (step 4).

### (3.3) Operation Example 1

In this operation example, in at least a part of FR2x (which may be a higher frequency band), an SSB using a specific SCS and an SSB using another SCS change the assumption about the candidate value and/or the number of candidate values of the SCS of the RMSI associated with the SSB.

### (3.3.1) Operation Example 1-1

The UE200 may assume that at least one of the candidate values and the number of candidate values of the SCS for RMSI (specific system information) associated with the specific SCS for SSB (referred to as the first subcarrier spacing, e.g., 120 kHz) is different from at least one of the candidate values and the number of candidate values of the SCS for RMSI (specific system information) associated with the other SCS for SSB (referred to as the second subcarrier spacing, e.g., 480 kHz).

Fig. 6 shows an example of the association between the SSB SCS and the RMSI SCS according to the operation example 1-1. As shown in Fig. 6, in the case of FR2x, at least either the candidate value or the number of candidate values of the RMSI SCS may be different depending on the SSB SCS.

Specifically, if the SSB SCS is 120 kHz, only the RMSI SCS=120 kHz may be assumed. If the SSB SCS is 240 kHz, only the RMSI SCS=120 kHz may be assumed.

If SSB SCS=480 kHz, then RMSI SCS=120 kHz or 480 kHz may be assumed. If SSB SCS=960 kHz, then RMSI SCS=120 kHz or 960 kHz may be assumed.

When multiple (2) candidate SCS values are specified as RMSISCS, which SCS is applied may be notified using 1 bit of subCarrierSpacingCommon.

Although the RMSI SCS associated with the SSB SCS may not be particularly limited, the RMSI SCS may be the same as or smaller than the SSB SCS. The minimum value of the RMSI SCS may also be limited to 120 kHz, as shown in the example of Fig. 6.

The number of candidate values of the RMSI SCS associated with each SSB SCS may be limited to two that can be notified in 1 bit, and one of the candidate values may be the same SCS as the SSB SCS. Another of the candidate values may be the SCS assumed at the initial access.

Also, the SCS assumed at initial access may be limited to a specific SCS (For example, 120 kHz). On the other hand, in cases other than initial access (For example, when peripheral cell measurement is set, when CGI (Cell Global Identifier) measurement/reporting is set for ANR(Automatic Neighbour Relation) in addition to peripheral cell measurement.), it may be assumed that the SSB SCS is set to measure an SCS other than the specific SCS described above (For example, 120 kHz, 480 kHz, or 960 kHz).

According to this operation example, the SSB SCS and the RMSI SCS can be aligned with the same SCS, or the load of the UE can be reduced by assuming only a 120 kHz SSB SCS for initial access, while the other UE with non-initial access can assume an SCS for initial access while using a 480 kHz or 960 kHz SSB SCS.

### (3.3.2) Operation Example 1-2

If, as in Operation Example 1-1 described above, in at least part of FR2x, an SSB using a particular SCS and an SSB using another SCS change the assumption about the candidate value and/or number of candidate values for the SCS of the RMSI associated with the SSB, the UE200 may assume the QCL parameter for the SSB, specifically N_SSB^QCL, as follows:
Fig. 7 shows an example of the method assumed for N_SSB^QCL according to Operation Example 1-2. As shown in Fig. 7, the UE200 may assume an N_SSB^QCL according to any option when utilizing FR2x and assuming a change in the association between a particular SSB SCS and an RMSI SCS.
▪ (Option 1): The notification method (subCarrierSpacingCommon + ssb-SubcarrierOffset LSB) in the MIB of the N_SSB^QCL assumed in the operation with shared channel access of FR1 is not assumed in the relevant frequency band. A specific value (For example, 64) may be assumed for the N_SSB^QCL until it is notified in a higher layer parameter such as ssb-PositionQCL (tentative name) by SIB1 or RRC.
▪ (Option 2): Assumes a notification in the MIB for the N_SSB^QCL using a method different from the notification in the MIB for the N_SSB^QCL assumed in FR1 operation with shared channel access (subCarrierSpacingCommon + ssb-SubcarrierOffset LSB).

At least one of the following may be used for the notification in the different method:
▪ Part of systemFrameNumber (SFN)

In this case, the SFN where the SSB can be placed may be limited to a part (For example, only even SFN).
▪ pdcch- Part of ConfigSIB1
▪ Spare bit

Note that, as described above, pdcch-ConfigSIB1 may be included in the MIB and used to determine CORESET, the common search space, and the necessary PDCCH parameters.
▪ (Option 3): A specific value (For example, 64) is always assumed for N_SSB^QCL in the frequency band.

In this case, assumptions for N_SSB^QCL other than the specific value may be abandoned.

Note that although operation example 1-2 assumes operation example 1-1, only operation example 1-2 may be applied regardless of whether operation example 1-1 is applied.

### (3.4) Operation Example 2

In this example, only a specific SCS is assumed to be common to the SSB and the RMSI in the initial access, and a plurality of SCSs including a specific SCS are assumed to be common to the SSB and the RMSI in the non-initial access, in at least a part of the FR2x (which may be a higher frequency band).

### (3.4.1) Operation Example 2-1

The UE200 may assume only a specific SCS in common for the SSB and RMSI during initial access. On the other hand, the UE200 may assume a plurality of candidate SCSs including the specific SCS in common for the SSB and RMSI in cases other than initial access.

Fig. 8 shows an example of the connection between the SSB SCS and the RMSI SCS according to the operation example 2-1. As shown in Fig. 8, in the initial access, only a specific SCS may be commonly assumed for the SSB and the RMSI.

Specifically, if SSB SCS=120 kHz, only RMSI SCS=120 kHz may be assumed. It may also be assumed that SSB SCS=240 kHz is not supported in at least some parts of FR2x (which may be higher frequency bands).

If SSB SCS=480 kHz, RMSI SCS=480 kHz may be assumed, and if SSB SCS=960 kHz, RMSI SCS=960 kHz may be assumed. In this case, 1 bit of subCarrierSpacingCommon in the MIB may be used separately from the notification of RMSI SCSs.

Similarly to operation example 1-1, the SCSs assumed at initial access may be limited to specific SCSs (For example, 120 kHz). On the other hand, in cases other than initial access (For example, when peripheral cell measurement is set, when CGI measurement/reporting is set for ANR in addition to peripheral cell measurement.), it may be assumed that the SSB SCS is set to measure SCSs other than the aforementioned specific SCSs (For example, 120 kHz, 480 kHz, or 960 kHz).

According to this operation example, by aligning the SCS of the SSB and the RMSI with the same SCS, the subCarrierSpacingCommon in the MIB can be used for other applications. For initial access, the 120 kHz SCS can be assumed to be only the SSB, thereby reducing the load on the UE.

### (3.4.2) Operation Example 2-2

As in Example 2-1 above, when only a specific SCS is commonly assumed for the SSB and RMSI during initial access, the UE200 may assume the QCL parameter for the SSB, specifically N_SSB^QCL, as follows:

Fig. 9 shows an example of the method of assuming N_SSB^QCL according to Example 2-2. As shown in Fig. 9, when the UE200 uses FR2x and assumes a common SCS for SSB and RMSI in initial access, N_SSB^QCL may be assumed according to any option.
▪ (Option 1): The same method as the notification method (subCarrierSpacingCommon + ssb-SubcarrierOffset LSB) in the MIB of N_SSB^QCL assumed in operation with shared channel access of FR1 is assumed for the relevant frequency band (band).
▪ (Option 2): For N SSB^QCL, assume notification in the MIB in a manner different from the notification method in the MIB of N_SSB^QCL assumed in operation with shared channel access of FR1 (subCarrierSpacingCommon + ssb-SubcarrierOffset LSB).

At least one of the following may be used for the notification in the different manner:
▪ Part of systemFrameNumber (SFN)
   In this case, the SFN where the SSB can be placed may be limited to a part (For example, only even SFN).
▪ pdcch- Part of ConfigSIB1
▪ Spare bit
▪ (Option 3): The frequency band (band) always assumes a specific value (For example, 64) for N_SSB^QCL.

In this case, the subCarrierSpacingCommon may be used for a different purpose than the N_SSB^QCL notification.

Note that although the operation example 2-2 assumes the operation example 1-1, only the operation example 2-2 may be applied regardless of whether the operation example 2-1 is applied.

### (4)Operational effects

According to the UE200 relating to the operation example described above, even if many SCSs such as 960 kHz are supported in different frequency bands such as 52.6~71 GHz(FR2x), which are different from FR1 and FR2, an appropriate SCS for RMSI can be quickly assumed from the SCS for SSB. In addition, the load of the UE200 can be reduced, and a flexible configuration of the RMSI SCS based on the SSB SCS can be realized.

### (5)Other Embodiments

Although the embodiments have been described above, they are not limited to the description of the embodiments, and it is obvious to those skilled in the art that various modifications and improvements can be made.

For example, in the above-described embodiments, an example in which a large number of SCSs are used in FR2x has been described, but the above-described operation example may be applied when a similar large number of SCSs are used in a frequency band other than FR2x, such as a frequency band higher than FR2x or a frequency band lower than FR2x. Some SCSs may not necessarily be used.

In the above description, configure, activate, update, indicate, enable, specify, and select may be interchanged. Similarly, link, associate, correspond, and map may be interchanged, and allocate, assign, monitor, and map may be interchanged.

In addition, specific, dedicated, UE-specific, and UE-specific may be interchanged. Similarly, common, shared, group-common, UE-common, and UE-shared may be interchanged.

In the present disclosure, terms such as "precoding," "precoder," "weight," "quasi-co-location (QCL)," "Transmission Configuration Indication state(TCI state)" "spatial relation," "spatial domain filter," "transmit power," "phase rotation," "antenna port," "antenna port group," "layer," "number of layers," "rank," "resource," "resource set," "resource group," "beam," "beam width," "beam angle," "antenna," "antenna element," "panel," and the like may be used interchangeably.

In addition, the block diagram (Fig. 4) used in the description of the above-described embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

In addition, the gNB100 and UE200 described above may function as computers for processing the radio communication method of the present disclosure. Fig. 10 is a diagram showing an example of a hardware configuration of the gNB100 and UE200. As shown in Fig. 10, the gNB100 and UE200 may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. The hardware configuration of the gNB100 and UE200 may be configured to include one or more of the devices shown, or may be configured without some of the devices.

Each functional block of gNB100 and UE200 (see Fig. 4) is implemented by any hardware element or combination of hardware elements of the computer device.

In addition, each function of gNB100 and UE200 is implemented by loading predetermined software (programs) onto hardware, such as processor 1001 and memory 1002, so that processor 1001 performs operations to control communication by communication device 1004 and at least one of data reading and writing in memory 1002 and storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), or the like, which may provide some or all of each functional block. For example, the processor 1001 may be implemented by using at least one of these hardware.

Information notification is not limited to the aspects/embodiments described in the present disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 bus

## Claims

1. A terminal comprising:
a reception unit that receives a synchronization signal block and specific system information; and
a control unit, in at least a part of different frequency bands different from frequency bands including one or more frequency ranges, which assumes that at least one of candidate values of a subcarrier spacing for the specific system information associated with a first subcarrier spacing for the synchronization signal block and a number of the candidate values is different from at least one of candidate values and a number of the candidate values associated with a second subcarrier spacing for the synchronization signal block.

2. A terminal comprising:
a reception unit that receives a synchronization signal block and specific system information; and
a control unit, in at least a part of different frequency bands different from frequency bands including one or more frequency ranges, which assumes only a specific subcarrier spacing commonly for the synchronization signal block and the specific system information during initial access and assumes multiple subcarrier spacings including the specific subcarrier spacing commonly for the synchronization signal block and the specific system information other than during initial access.

3. A terminal comprising:
a reception unit that receives a synchronization signal block; and
a control unit, in at least a part of different frequency bands different from frequency bands including one or more frequency ranges, which assumes that a specific quasi-colocation value is applied to the synchronization signal block.

4. A terminal comprising:
a reception unit that receives a synchronization signal block; and
a control unit, in at least a part of different frequency bands different from frequency bands including one or more frequency ranges, which assumes quasi-colocation of the synchronization signal block to the synchronization signal block based on a method for notifying quasi-colocation in shared spectrum channel access.

5. A terminal comprising:
a reception unit that receives a synchronization signal block; and
a control unit, in at least a part of different frequency bands different from frequency bands including one or more frequency ranges, which assumes quasi-colocation of the synchronization signal block to the synchronization signal block based on a notification method different from a notification method of quasi-colocation in shared spectrum channel access.
